Europäisches Patentamt

European Patent Office

Office européen des brevets

(19)

(11) EP 0 848 865 B1

# (12) EUROPEAN PATENT SPECIFICATION

(45) Date of publication and mention
of the grant of the patent:
**03.03.1999 Bulletin 1999/09**

(21) Application number: **96926809.3**

(22) Date of filing: **30.07.1996**

(51) Int Cl.$^6$: **H02G 15/068**, H02G 15/184

(86) International application number:
**PCT/US96/12478**

(87) International publication number:
**WO 97/09763 (13.03.1997 Gazette 1997/12)**

(54) **STRESS CONTROL FOR TERMINATION OF A HIGH VOLTAGE CABLE**

FELDSTEUERUNG FÜR HOCHSPANNUNGSKABELENDVERSCHLUSS

LIMITATION DE L'ACCUMULATION DES CHARGES DANS LES EXTREMITES DE CABLES A HAUTE TENSION

(84) Designated Contracting States:
**DE ES FR GB IT**

(30) Priority: **06.09.1995 US 524236**

(43) Date of publication of application:
**24.06.1998 Bulletin 1998/26**

(73) Proprietor: **MINNESOTA MINING AND MANUFACTURING COMPANY**
**St. Paul, Minnesota 55133-3427 (US)**

(72) Inventors:
• WANDMACHER, Robert, A.
**Saint Paul, MN 55133-3427 (US)**
• HEYER, Thomas, J., D.
**Saint Paul, MN 55133-3427 (US)**
• LAWRENCE, C., Chor
**Saint Paul, MN 55133-3427 (US)**

(74) Representative:
**Hilleringmann, Jochen, Dipl.-Ing. et al**
**Patentanwälte**
**von Kreisler-Selting-Werner,**
**Bahnhofsvorplatz 1 (Deichmannhaus)**
**50667 Köln (DE)**

(56) References cited:
**EP-A- 0 121 986**   **WO-A-84/03993**
**FR-A- 2 518 837**   **US-A- 4 363 842**

**Description**

Field of the Invention

The present invention relates to electrical stress control and more particularly to a method and an arrangement to control electrical stress in a region of high electric field strength associated with high voltage electrical equipment.

Background of the Invention

It is well known to employ stress control means to control electrical stress due to a discontinuity in a region of high electrical field strength high voltage electrical equipment, for example, electrical bushings, and joints or terminations of high voltage cables. Such stress control means typically comprise stress cones and tapes or tubular articles of semi-conductive stress control material. This invention is directed to stress control means comprising high permittivity stress control material and provides improved corona discharge extinction, power frequency voltage withstand and impulse voltage withstand performance over prior art arrangements using such stress control means. For purposes of illustration, this invention is described primarily as it applies to a termination of a high voltage cable. The invention can be applied, however, to other electrical equipment where stress control is desired.

A typical high voltage cable includes an inner conductor surrounded by a conductor shield which is, in turn, surrounded by an insulating material that is surrounded by an outer electrically semi-conductive shield, in some instances, and metal shield. In terminating such a cable, it is customary to remove or cut back each successive layer of the cable to expose the layer below. Cutting back the electrically semi-conductive shield causes a discontinuity in the electric field resulting in high electric stress at the end of the shield. The high electrical stress can cause electrical discharges to occur, which in turn tend to cause breakdown of the insulation of the cable. The high electrical stress can be controlled by electrical stress control means.

High-voltage alternating current cable terminations are generally tested in the U.S. under the IEEE standard test procedure Std. 48-1990. This procedure sets forth, inter alia, design tests to be performed by the manufacturer to obtain information on the performance of a high voltage cable termination.

The design tests of the IEEE procedure that are particularly useful in determining the effectiveness of a termination which includes a stress control arrangement include the "Partial Discharge (Corona) Extinction Voltage Test," the "Power Frequency Voltage Withstand Test" and the "Lightning Impulse Voltage Withstand Test." In the discharge extinction voltage test, electrical discharge in the termination is measured at specific applied voltages and has to be below specific values. Also the voltage at which the discharge extinguishes is measured and has to be above specific values. In the power frequency voltage withstand tests the specified voltage is applied to the cable and should be withstood without flashover or other dielectric breakdown. In the impulse voltage withstand test, impulses of specific value and waveform are applied to the cable and should be withstood without flashover or other dielectric breakdown. The voltage at which flashover occurs should be above specific values. The discharge, power frequency voltage and impulse voltage performance of the termination should meet the requirements set forth in the IEEE Standard Test procedures STD 48-1990.

The use of stress control material in high voltage cable terminations does not always produce terminations that meet the impulse performance requirements of the IEEE test procedures. In order to meet this requirement the stress control arrangement may be augmented by the use of rain sheds. While sheds are typically employed with outdoor terminations for other purposes, they are not generally employed when the cable termination is installed indoors. Since the use of sheds adds to the cost of the termination and requires additional space around the cable, it is desirable to be able to dispense with the use of the sheds yet still meet the desired impulse performance.

WO-A- 84 03993 discloses a power cable termination having features as defined in the preamble of claim 1.

The present invention, provides a novel arrangement that significantly improves the termination's discharge, power frequency voltage and impulse voltage performance without the use of sheds. While the present invention is primarily described in connection with a termination of a cable, it is suitable for employment with high voltage cable joints and other high voltage equipment including electrical bushings and feedthroughs.

Summary of the Invention

The present invention includes an elastically recoverable elastomeric insulating sleeve which is provided with an inner support or "core" which holds the sleeve in a stretched condition. The sleeve is placed over the power cable and the core is unwound and removed, allowing the sleeve to contract into contact with the cable. Between the sleeve and the core is disposed a two-part stress control system consisting of a non-tacky, void-filling conformable stress control material surrounded by an elastomeric stress control tube. Both the conformable stress control material and the stress control tube have high permittivity (greater than 10). "Permittivity" is synonymous with dielectric constant and is the ratio of electric flux generated by an electrical field in a medium to that generated by the field in a vacuum.

The present invention defines relationships among the permittivities of the conformable stress control material and the stress control tube, the thicknesses of both members, and the length the conformable stress control material extends from the edge of the semi-conductive shield layer of the cable.

Brief Description of the Drawings

The present invention will be described with respect to the accompanying drawings, wherein like numbers refer to like parts in the several views, and wherein:

Figure 1 is a cross-sectional view of a stress control termination sleeve of the present invention without rain sheds;
Figure 2 is a cross-sectional view of the stress control termination sleeve of the present invention with rain sheds; and
Figure 3 is a cross-sectional view of the stress control termination sleeve of the present invention as applied to an electrical power cable.

Description of the Preferred Embodiment

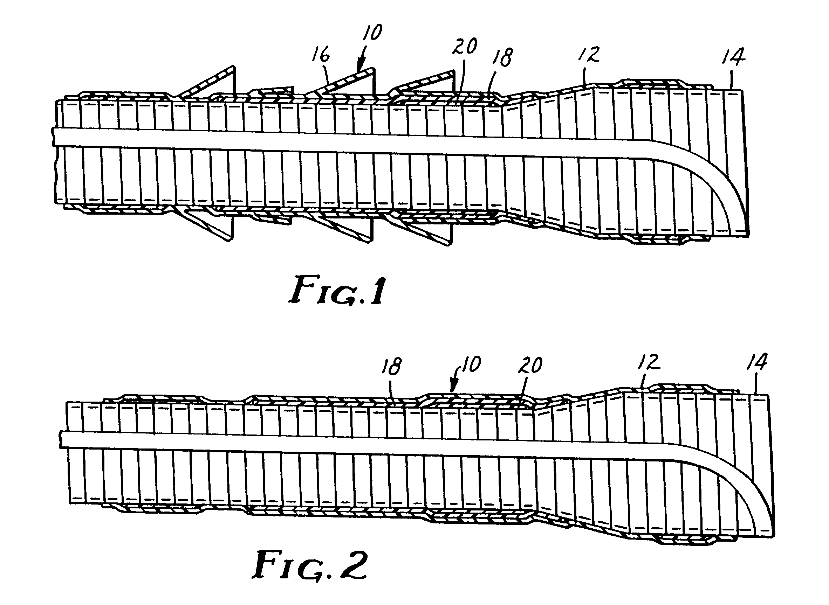

Figure 1 illustrates a termination assembly, generally indicated as 10, according to one embodiment of the present invention. The assembly 10 is a pre-stretched tubular sleeve 12 supported in the stretched condition by an easily removeable core 14. The assembly 10 is typically designated a "PST", which stands for pre-stretched tube. Such an assembly 10 is taught in U.S. patent no. 3,515,798, incorporated herein by reference. Preferably the core 14 is a one-piece rigid spiral core having interconnected adjacent coils in a closed helical configuration, as described in U.S. patent no. 3,515,798. The outer sleeve 12 is preferably silicone rubber, although a wide variety of materials may be used so long as they possess the required arc and track resistance, ultraviolet resistance and ability to stretch and recover substantially their original dimensions when the core 14 is removed.

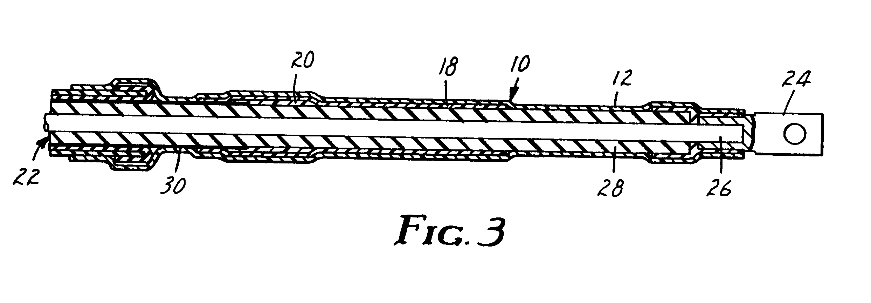

The termination assembly of Figure 1 is primarily intended for outdoor use and so includes rain sheds 16 which increase the tracking length along the length of the sleeve 12. Space is usually more critical in indoor applications, so the rains sheds 16 are usually dispensed with in these situations, as shown in Figure 2. Either termination assembly 10 is applied as shown in Figure 3 to an electrical power cable 22 which has a suitable terminating device such as the lug 24 shown crimped to the conductor 26 of the cable 22.

To apply the lug 24 and thus terminate the cable 22, the cable 22 must be prepared by removing a predetermined length of insulation 28 covering the conductor 26 and a greater predetermined length of semi-conductive shielding 30 covering the insulation 28. Cutting back the shield 30 causes a discontinuity in the electrical field surrounding the conductor 26 which results in high electrical stresses an the end of the shield 30. The high stress can cause electrical discharge to occur, which in turn may cause breakdown of the insulation 28 of the cable 22 or the termination sleeve 12. The present invention is intended to control these high electrical stresses to avoid these undesirable results.

Electrical stress control is provided in the termination 10 by the combined use of a high permittivity stress control tube 18 lining a portion of the sleeve 12, and a conformable stress control material 20 within the stress control tube 18. The thicknesses of the stress control tube 18 and the conformable stress control material 20, the length of the conformable stress control material 20 and the permittivity of both the stress control tube 18 and the conformable stress control material 20 are controlled to accomplish the desired stress control within the termination assembly 10.

The high permittivity stress control tube 18 is described generally in U.S. patent number 4,363,842, which is incorporated herein by reference. The article taught in that patent has been modified somewhat to produce the preferred stress control tube 18 defined by the following composition:

|  | Parts by Weight |
|---|---|
| Nordel 1470 (Tradename for an ethylene/propylene/diene monomer rubber commercially available from Dupont) | 50 |
| Nordel 1440 (Tradename for an ethylene/propylene/diene monomer rubber commercially available from Dupont) | 50 |
| Zinc oxide (French Process) | 5.0 |

(continued)

|  | Parts by Weight |
|---|---|
| ARO60 Carbon Black (a N754 grade, large particle size carbon black commercially available from J.M. Huber) | 71.35 |
| 4X Mineralite Mica (commercially available from Thompson Hayward Chemical) | 20 |
| D-148 (Tradename for a processing aid commercially available from Ventron | 2.0 |
| Struktol WB-16 (Tradename for a mixture of fatty acid soap, predominantly calcium, available from Struktol Company) | 2.0 |
| EF (A-172) D-50 (Tradename for a vinyl silane coupling agent predispersed on a hydrocarbon wax commercially available from Elastochem) | 1.0 |
| Sunpar 2280 (Tradename for a paraffinic process oil commercially available from the Sun Company) | 9.8 |
| Plasthall DOZ (Tradename for Di-2-Ethylhexyl Azelate commercially available from C.P. Hall Co.) | 13.3 |
| Plasthall DIDG (Tradename for Diisodecyl Glutarate commercially available from C.P. Hall Co.) | 13.3 |
| Silvex 113-20-C (Tradename for a mineral oil treated aluminum flake of 22 micron average particle diameter commercially available from Silberline Manufacturing) | 8.5 |
| Drimix SR-297-75E (Tradename for 1,3 butylene dimethacrylate dispersion commercially available from Kenrich Petrochemicals) | 7.0 |
| E (VC) D-40 (Trade name for a difunctional peroxide dispersion commercially available from Elastochem) | 4.5 |

The conformable stress control material 20 is described in U.S. patent application 08/524,390 filed on like date as the present application and identified as attorney docket number 51948USA5A. The conformable stress control material 20 is comprised of a resin component which consists of a blend of two polymeric resins; epihalohydrin polymers and insulating polymers having an electrical dissipation factor (tan δ) of less than 1.

Epihalohydrin polymers suitable for use are the elastomeric polymers of an epihalohydrin in homopolymer or copolymer form. Such polymers are prepared by polymerization of the monomeric material in mass or in solution with organometallic catalysts, and may be homopolymers, copolymers, terpolymers, etc. Examples of homopolymers include epichlorohydrin, or epibromohydrin; useful copolymers include copolymers of epihalohydrins with alkylene oxides, and copolymers with epoxides, e.g., propylene oxide, ethylene oxide, butene oxide, and epoxy ethers such as ethylglycidyl ether, allylglycidyl ether and the like. Such polymers are available from Zeon Chemicals, Inc.

Preferred epihalohydrin polymers include copolymers with alkylene oxides, particularly ethylene and propylene oxides.

The resin component also contains an insulating polymer having a tan δ of less than one. Useful polymers include silicone, EPM or EPDM and hydrocarbon rubbers. Useful silicones include silicones which are fluid at room temperature and gum silicones; gum silicones are preferred for easy compounding and processability; most preferred are those gum silicones having a durometer of about 30.

Commercially available silicone elastomers include those fluid silicones available as Dow Corning DC 10,000, and the like, and gum silicones available as Elastosil® R300/30 from Wacker Silicones Corporation, and Silastic® GP31 from Dow Corning, and the like.

This formulation produces a non-tacky, conformable stress control material 20 comprising:

a) about 100 parts of a resin component containing

1) from about 20% to about 80% of an epihalohydrin polymer, and
2) correspondingly, from about 80% to about 20% of an insulating polymer having a tan $\delta$ of less than one,

b) from about 8 to about 200 parts of a filler selected from the group consisting of barium titanate and hydrated aluminum silicate, and
c) from 0 to 30 parts of a plasticizer.

Preferred non-tacky electrical stress control materials comprise:

a) about 100 parts of a resin component containing

1) from about 20% to about 80% of an epihalohydrin polymer, and
2) correspondingly, from about 80% to about 20% of a silicone polymer having a tan $\delta$ of less than one,

b) from about 8 to about 200 parts barium titanate, and
c) from 0 to 30 parts of a plasticizer.

As stated earlier, the highest electrical stress of a prepared cable 22 occurs at the cut back end of the semi-conductive insulation shield 30. The present invention coordinates two components held to specific relative geometries based on their permittivities to provide stress control.
The inner conformable stress control material 20 is positioned to extend in both directions from the cut edge of the shield 30 and should have a thickness sufficient to fill the radial step from the outer surface of the cable insulation 28 to the outer surface of the shield 30. The stress control tube 18 covers the conformable stress control material 20 and extends beyond the conformable stress control material 20 in both directions from the edge of the shield 30.
The maximum internal electrical stress at the cable insulation 28 is primarily affected by the permittivity of the conformable stress control material 30. The relationship to predict the maximum stress is:

$$S_{\text{internal maximum}} = (V / (R \ln (R/r))) A$$

where:

$$A = 1.69 - 1.63 \times 10^{-2} \varepsilon_p;$$

$V$ is the applied voltage;

$R$ is the outside radius of the cable insulation;

$r$ is the inside radius of the cable insulation; and

$\varepsilon_p$ is the permittivity of the conformable stress control material.

The permittivity of the conformable stress control material must be high enough to prevent its breakdown at the maximum power frequency voltage withstand required for the cable and its attached termination to achieve the required voltage rating in accordance with industry standard tests. The breakdown strengths for the conformable stress control materials tested were about 11800 V/mm. The minimum values for the permittivity of the conformable stress control material at selected voltage levels are shown in the table below:

| Voltage Class (kV) | Power Frequency Voltage Withstand (kV for 1 minute) | $V/(R \ln (R/r))_{MAX}$ for 2500 MCM (V/mm) | $\varepsilon_{\rho(min)}$ for $V_{BD}$=11800 V/mm |
|---|---|---|---|
| 5.0 | 25 | 10450 | 34 |
| 8.7 | 35 | 11320 | 40 |
| 15 | 50 | 8365 | 17 |
| 25 | 65 | 8735 | 21 |
| 28 | 70 | 8665 | 20 |

(continued)

| Voltage Class (kV) | Power Frequency Voltage Withstand (kV for 1 minute) | $V/(R \ln (R/r))_{MAX}$ for 2500 MCM (V/mm) | $\varepsilon_{\rho(min)}$ for $V_{BD}=11800$ V/mm |
|---|---|---|---|
| 34.5 | 90 | 8820 | 22 |
| 46 | 120 | 8810 | 21 |
| 69 | 175 | 8245 | 16 |

As can be seen, the permittivity of the comformable stress control material should be at least about 16. Since the most common voltage range is 15 to 69 kV, the preferred value for the permittivity is greater than 22, and most preferably is greater than 25.

The maximum electrical stress along the outer surface of the termination sleeve 12 is affected by many parameters. The relationship to predict this maximum stress is:

$$S_{\text{external maximum}} = (V / (R \ln (R/r))) B$$

where:

$$B = 0.585 + 1.76 \times 10^{-3} \varepsilon_p - 2.43 \times 10^{-3} \varepsilon_t$$

$$+ 7.32 \times 10^{-5} l_p - 4.45 \times 10^{-2} t_t$$

$$- 3.39 \times 10^{-2} t_p - 4.45 \times 10^{-5} \varepsilon_p l_p$$

where:

$\varepsilon_p$ is the conformable stress control material's permittivity;

$\varepsilon_t$ is the stress control tube's permittivity;

$l_p$ is the length of the conformable stress control material over the cable insulation in millimeters;

$t_t$ is the thickness of the stress control tube in millimeters; and

$t_p$ is the thickness of the conformable stress control material in millimeters.

This relationship assumes a thickness of the termination sleeve 12 of about 2 mm. This thickness being the thinnest which will withstand voltage breakdown through the sleeve 12 to conserve material. Increased thickness of the sleeve 12 will also reduce stress at the outer surface of the sleeve 12.

The maximum permissible external stresses, S, must be below a level which would cause electrical breakdown of air during impulse conditions. The impulse breakdown strength for terminations was found to be between about 3000 and 9200 Volts/mm. The preferred embodiment should maintain stress at required impulse levels at about 3150 Volts/mm. This factor allows a maximum quantity for B to be calculated. The maximum permissible values for B at Voltages of interest are listed in the table below:

| Voltage Class (kV) | Lightning Impulse BIL (kV) | $V/(R \ln (R/r))_{MAX}$ for 2500 MCM (V/mm) | $B_{(MAX)}$ for $V_{BD}=9200$ V/mm |
|---|---|---|---|
| 5.0 | 75 | 800 | .292 |
| 8.7 | 95 | 780 | .300 |
| 15 | 110 | 465 | .499 |
| 25 | 150 | 510 | .456 |

(continued)

| Voltage Class (kV) | Lightning Impulse BIL (kV) | $V/(R \ln (R/r))_{MAX}$ for 2500 MCM (V/mm) | $B_{(MAX)}$ for $V_{BD}$=9200 V/mm |
|---|---|---|---|
| 28 | 175 | 550 | .423 |
| 34.5 | 200 | 500 | .470 |
| 46 | 250 | 465 | .502 |
| 69 | 350 | 420 | .558 |

From the relationship for B given above it can be seen that increases in the permittivity of the conformable stress control material 20 and the length of the conformable stress control material 20 tend to increase the stress at the outer surface of the sleeve 12, although this is offset somewhat by the last term of the relationship for B, wherein it can be seen that the product of the permittivity and length of the conformable stress control material 20 tends to decrease this stress. Increases in the permittivity and thickness of the stress control tube 18 both tend to decrease the stress at the outer surface of the sleeve 12, and strongly so. As stated above, increased thickness of the termination sleeve 12 will also reduce the stress at the outer surface of the sleeve 12. However, this thickness is maintained at the minimum required to prevent breakdown of the sleeve 12 itself, approximately 2 mm, since the silicone from which the sleeve 12 is made is relatively expensive.

In practice, it is preferred that the thickness of the conformable stress control material 20 be at least 1 mm and most preferably between 2 and 3 mm to ensure that the material 20 completely fills the step at the cut end of the shield 30. The length of the conformable material 20 is at least 10 mm and preferably 25 to 50 mm along the cable insulation 28, in addition it is preferred that the conformable material extend about 10 mm on top of the cable shield 30 to ensure intimate contact with the shield 30, although this extension is not necessary so long as there is contact between the conformable stress control material 20 and the cable shield 30.

The stress control tube 18 is preferably about 60 mm long, it being found that a longer length has no further effect for tube 18 permittivities of less than 50. The tube 18 should not extend beyond the cut end of the cable insulation 28 and should not extend beyond the cut-back point of any further layers (for example, any metal shielding) above the cable shield 30. The thickness of the tube 18 is preferably at least 1 mm and most preferably between 2 and 3 mm.

Manipulation of these various parameters permits one to predict, for example, the necessary permittivity of the stress control tube 18 to be determined based on dimensions given or allows one to predict the dimensions the two stress control components must assume for given permittivities of the materials.

The use of the two component stress control system described above consisting of the conformable stress control material 20 and the stress control tube 18 greatly improves stress control over approaches in the past, and so permits either improved electrical performance for a give termination length or allows a reduction in termination length (about 40% of prior devices) at a given performance level. Of course, these advantages may be combined to produce a somewhat shorter termination with improved electrical performance. Since all components may be loaded on the core 14 of the termination assembly 10, application of the components is a one-step process and so is very economical and convenient.

## Claims

1. A termination for an electrical power cable including an inner conductor (26), electrical insulation (28) surrounding the conductor (26) and a semi-conductive shield (30) surrounding the insulation, wherein the shield (30) is removed to a predetermined length and the insulation (28) is removed to a lesser predetermined length to expose the conductor (26), the termination comprising:

   a layer of relatively high permittivity conformable stress control material (20) disposed in contact with the end of the cable shield (30) and extending along the cable insulation (28);
   a polymeric stress control tube (18) over said conformable stress control material (20); and
   a polymeric electrically insulating layer (12) disposed over said stress control tube (18); CHARACTERISED IN THAT
   the permittivity $\varepsilon_p$ of said conformable stress control material (20) is at least about 16 and wherein the length $L_p$ of the said conformable stress control material (20) over said cable insulation (28), the thickness $t_p$ of said conformable stress control material (20) and the thickness $t_t$ of said stress control tube (18) are defined by the following equation, wherein B is less than about 0.56:

7

$$B = 0.585 + 1.76 \times 10^{-3}\, \varepsilon_p - 2.43 \times 10^{-3}\, \varepsilon_t$$

$$+ 7.32 \times 10^{-5}\, l_p - 4.45 \times 10^{-2}\, t_t$$

$$- 3.39 \times 10^{-2}\, t_p - 4.45 \times 10^{-5}\, \varepsilon_p\, l_p$$

wherein:

$\varepsilon_p$ is said conformable stress control material's permittivity;

$\varepsilon_t$ is said stress control tube's permittivity;

$l_p$ is the length of said conformable stress control material over said cable insulation in millimeters;

$t_t$ is the thickness of said stress control tube in millimeters; and

$t_p$ is the thickness of said conformable stress control material in millimeters.

**Patentansprüche**

1. Abschluß eines elektrischen Stromkabels mit einem inneren Leiter (26), einer den Leiter (26) umgebenden elektrischen Isolierung (28) und einer die Isolierung umgebenden halbleitfähigen Abschirmung (30), wobei die Abschirmung (30) auf eine vorbestimmte Länge entfernt ist und die Isolierung (28) auf eine geringere vorbestimmte Länge entfernt ist, um den Leiter (26) freizulegen, wobei der Abschluß aufweist:

eine Schicht aus konformem Feldsteuermaterial (20) mit relativ hoher absoluter Dielektrizitätskonstante, die in Kontakt mit dem Ende der Kabelabschirmung (30) angeordnet ist und sich entlang der Kabelisolierung (28) erstreckt;

ein über dem konformen Feldsteuermaterial (20) angeordnetes polymeres Feldsteuerrohr (18); und

eine über dem Feldsteuerrohr (18) angeordnete polymere elektrisch isolierende Schicht (12);

dadurch gekennzeichnet, daß
die absolute Dielektrizitätskonstante $\varepsilon_p$ des konformen Feldsteuermaterials (20) wenigstens ungefähr den Wert 16 hat, und wobei die Länge $L_p$ des konformen Feldsteuermaterials (20) über der Kabelisolierung (28), die Dicke $t_p$ des konformen Feldsteuermaterials (20) und die Dicke $t_t$ des Feldsteuerrohres (18) durch die folgende Gleichung definiert sind, wobei B kleiner als ungefähr 0,56 ist:

$$B = 0{,}585 + 1{,}76 \times 10^{-3}\, \varepsilon_p - 2{,}43 \times 10^{-3}\, \varepsilon_t$$

$$+ 7{,}32 \times 10^{-5}\, l_p - 4{,}45 \times 10^{-2}\, t_t$$

$$- 3{,}39 \times 10^{-2}\, t_p - 4{,}45 \times 10^{-5}\, \varepsilon_p\, l_p$$

wobei:

$\varepsilon_p$ die absolute Dielektrizitätskonstante des konformen Feldsteuermaterials ist;

$\varepsilon_t$ die absolute Dielektrizitätskonstante des Feldsteuerrohres angibt;

$l_p$ die Länge des konformen Feldsteuermaterials über der Kabelisolierung in Millimetern angibt;

$t_t$ die Dicke des Feldsteuerrohres in Millimetern bezeichnet; und

$t_p$ die Dicke des konformen Feldsteuermaterials in Millimetern angibt.

**Revendications**

1. Terminaison pour un câble électrique de puissance comprenant un conducteur interne (26), un isolant électrique (28) entourant le conducteur (26) et un blindage semi-conducteur (30) entourant l'isolant, dans laquelle le blindage (30) est enlevé sur une longueur prédéterminée et l'isolant (28) est enlevé sur une longueur prédéterminée moindre afin d'exposer le conducteur (26), ladite terminaison comprenant :

   une couche de matériau de limitation de l'accumulation de charges adaptable (20) ayant une permittivité relativement élevée, disposée en contact avec l'extrémité du blindage de câble (30) et s'étendant le long de l'isolant de câble (28) ;
   un tube de limitation de l'accumulation de charges (18) en polymère par-dessus ledit matériau de limitation de l'accumulation de charges adaptable (20) ; et
   une couche polymère électriquement isolante (12) disposée par-dessus ledit tube de limitation de l'accumulation de charges (18) ;

   caractérisée en ce que
   la permittivité $\varepsilon_p$ dudit matériau de limitation de l'accumulation de charges adaptable (20) est au moins égale à 16, la longueur $L_p$ dudit matériau de limitation de l'accumulation de charges adaptable (20) sur ledit isolant de câble (28), l'épaisseur $t_p$ dudit matériau de limitation de l'accumulation de charges adaptable (20) et l'épaisseur $t_t$ dudit tube de limitation de l'accumulation de charges (18) étant définies par l'équation suivante, dans laquelle B est inférieur à 0,56 environ :

$$B = 0,585 + 1,76 \times 10^{-3}\, \varepsilon_p - 2,43 \times 10^{-3}\, \varepsilon_t$$

$$+ 7,32 \times 10^{-5}\, l_p - 4,45 \times 10^{-2}\, t_t$$

$$- 3,39 \times 10^{-2}\, t_p - 4,45 \times 10^{-5}\, \varepsilon_p\, l_p$$

   dans laquelle :

   $\varepsilon_p$ est la permittivité dudit matériau de limitation de l'accumulation de charges adaptable ;
   $\varepsilon_t$ est la permittivité dudit tube de limitation de l'accumulation de charges ;
   $l_p$ est la longueur en millimètres dudit matériau de limitation de l'accumulation de charges adaptable sur l'isolant du câble ;
   $t_t$ est l'épaisseur en millimètres dudit tube de limitation de l'accumulation de charges ; et
   $t_p$ est l'épaisseur en millimètres dudit matériau de limitation de l'accumulation de charges adaptable.

FIG.1

FIG.2

FIG. 3